# EUROPEAN PATENT APPLICATION

(11) **EP 2 887 483 A1**
(43) Date of publication of application: **24.06.2015**
(21) Application number: 14020110.4
(22) Date of filing: 13.12.2014
(51) Int. Cl.: H02H 3/087, H02J 1/08, H02J 5/00

(54) **Breaker circuit configurations for multi-terminal DC systems**

(30) Priority: 18.12.2013 GB 201322546
(71) Applicant: PWM Drives Limited, Colinton, Edinburgh EH130HD (GB)
(72) Inventor: Williams, Barry Wayne, Edinburgh, EH130HD (GB); Fletcher, John Edward, Wahroonga, NSW 2076 (AU)

(57) **Abstract**

Multi-terminal DC system interconnection where three DC electrical feeds (18-20) are interconnected is shown. Each terminal of each DC feed (18-20) is connected to each of the other terminals through a breaker circuit (21-23). Hence current flows from one terminal of one DC electrical feed, for example (18), to another terminal feed, for example (19), through one breaker circuit (21) rather than two breaker circuits with prior art techniques.

## Description

### Background and Prior Art

DC transmission and distribution of electrical energy is an emerging technological area, particularly but not exclusively for the interconnection of renewable energy resources, notably wind and photovoltaic energy. Such DC systems are utilised in onshore situations where distances between sending end and receiving ends are typically hundreds of kilometres. DC systems are also used for offshore systems when the distances between the sending end and receiving ends are typically greater than a few tens of kilometres.

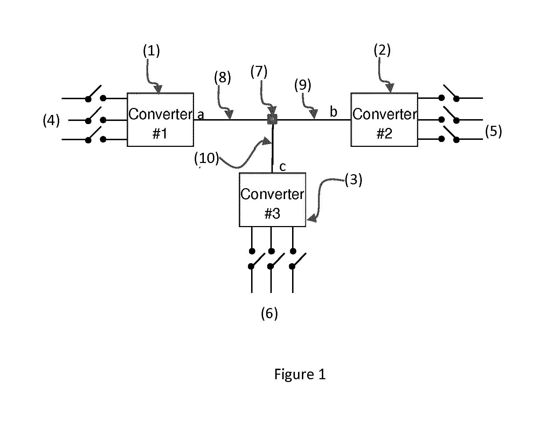

Our invention relates to the configuration of circuit breakers used to protect multi-terminal DC systems. The term multi-terminal is used to indicate that at some point in the DC network there are one or more connections which have more than two interconnecting terminals. Figure 1 illustrates an example of a connection with three terminals which has three converters (1-3) interconnecting three separate AC systems (4-6). There is a DC connection (7) which interconnects the terminals of the three DC electrical feeds (8-10) from each of the three AC power systems via associated converters (1-3). The DC electrical feeds might be cables or overhead wires, for example.

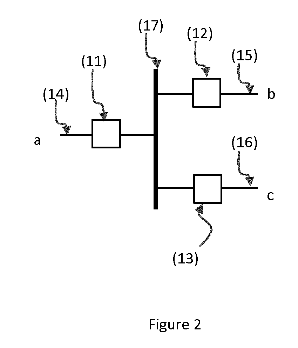

According to the prior art for AC system protection, at the connection (7) there will be circuit breakers on each DC electrical feed (4-6) to protect each feed and to allow all faults in the system to be isolated. Figure 2 shows the arrangement of circuit breakers (11-13) which are used to protect each of the electrical feeds (14-16) according to prior art. The electrical feeds (14-16) connect to a common DC bus (17) through the circuit breakers (11-13). If a fault occurs, the protection system detects the fault and activates the appropriate set of breaker circuits in order to isolate the fault. The system can then resume operation with the faulted section now isolated.

In such a prior art system, at the connection, current flow between the AC systems (4-6) must pass through two circuit breakers. For example, if power is sent from AC system associated with terminal 'a' (14) to the AC system associated with terminal 'b' (15), the current must pass through circuit breakers (11) and (12). Passage of current through a circuit breaker incurs a loss and the technical advantage of our invention is to reduce the number of circuit breakers that current has to flow through in order to transfer power from one system to another. By using such a method the transmission efficiency is improved by reducing the losses incurred in the circuit breakers. In addition, the invention allows one or more breaker circuits to be out of service with the power system still capable of transferring power between systems with some limitations on power flows.

In AC systems, the losses incurred in AC circuit breakers are generally low as the breakers have a low equivalent resistance hence a low voltage drop across the circuit breaker element. Typically the power losses in an AC circuit breaker are negligible compared to the power passing through the circuit breaker. However, DC circuit breaker technology, particularly for high voltage systems, will utilise new technologies, including semiconductor-based breaking where on state losses will be high. With such circuit breaker technologies, it is necessary to reduce the number of circuit breakers that current flows through as it transits through the DC system. Our invention addresses this issue and provides additional technical benefits over the prior art.

### Disclosure of Invention

A configuration of breaker circuits for interconnection of multi-terminal connections in multi-terminal DC electrical power systems where each individual terminal is interconnected to each of the other individual terminals through a breaker circuit.

### Brief Description of Drawings

In order that the invention be more fully understood reference will now be made to the accompanying drawings, in which
Figure 1 illustrates a multi-terminal DC system which has three terminals.
Figure 2 illustrates the prior art in the configuration of breaker circuits at the connection point between three DC terminals.
Figure 3 illustrates one possible embodiment of the invention showing the connection of three DC terminals through breaker circuits.
Figure 4 illustrates one possible embodiment of the invention showing the connection of four DC terminals through breaker circuits.
Figure 5 illustrates one possible embodiment of the invention showing the connection of three DC terminals through breaker circuits where one power flow path is not required.
Figure 6 illustrates one possible embodiment of the invention showing the connection of three DC terminals through breaker circuits incorporated with DC voltage transformation elements when the interconnected systems operate at different voltages.

All Figures present simplified diagrams of the interconnection between DC electrical feeds through breaker circuits. For clarity the figures do not show the necessary balance of plant, for example, disconnectors, fuses, energy and surge suppressors, isolators, monitoring and control elements that are also required.

### Detailed Description of Invention

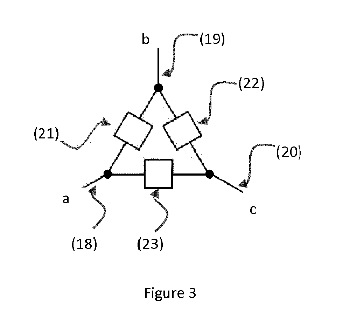

Figure 3 illustrates one embodiment of the invention. The example shows a connection in a multi-terminal DC system where three DC electrical feeds (18-20) are interconnected at a point which is the equivalent of (7) in Figure 1. In the embodiment of the invention, each terminal of each DC feed (18-20) is connected to each of the other terminals through a breaker circuit (21-23). Hence current flows from one terminal of one DC electrical feed, for example (18), to another terminal feed, for example (19), through one breaker circuit (21). Similar flow paths exist for current flow between pairs terminals: current from (19) to (20) flows through breaker circuit (22) and current from (20) to (18) flows through (23). The three DC electrical feeds (18-20) at the interconnection point could be from separate DC systems, or could be formed by the interconnection of a new DC electrical system to an existing DC electrical system where it is typically required to 'split' the existing DC electrical system thereby creating two DC electrical feeds, for example (18) and (19), which are then interconnected with the new DC electrical feed, for example (20).

A key technical advantage of the invention is that current need only flow through one breaker circuit in order to transfer between DC electrical feeds compared with current having to flow through two breaker circuits when using the prior art.

Figure 2 shows the prior art solution which is used to demonstrate the advantage of the invention. In order for current to flow from terminal 'a' (14) to terminal 'b' (15), current must pass through breaker circuits (11) and (12). Compared to the embodiment of the invention, for example shown in Figure 3, the total loss in the prior art is twice as high. This assumes that the voltage drop across each breaker circuit is fixed which is a situation encountered when, for example, using a semiconductor breaker circuit utilising IGBT technology.

Some semiconductors have a fixed on-state resistance, for example, MOSFETs. If such semiconductors are used as the basis for the semiconductor breaker circuits (21-23) then the total losses in the breaker circuit configuration proposed by this invention are approximately one third of the prior art. This reduction in losses occurs as current can transit from one terminal to another terminal through parallel paths. As an example, current flow from terminal 'a' (18) to 'b' (19) will follow two parallel paths through breaker circuit (21) and through the series combination of breaker circuit (23) and (22). Standard circuit analysis yields an equivalent resistance of 2/3pu for the path from terminals (18) to (19) where 1 pu represents the resistance of a single breaker circuit. The equivalent resistance in the prior art solution is 2pu. Accordingly the losses are approximately one third of those incurred by the prior art for the three terminal interconnection. The improvement in losses may be lower depending on the type of semiconductor utilised.

The parallel paths through which current can pass in order to transit from one terminal to another terminal allows power flow to continue between terminals in the event of a breaker circuit being out of service. Limitations on power flow would be applied but it is still possible for all three power flow paths to be utilised with one breaker circuit out of service in the embodiment shown in Figure 3. In the prior art scheme an out of service breaker circuit would result in only one out of three power flow paths being available. Therefore the proposed invention is tolerant to breaker circuits being out of service.

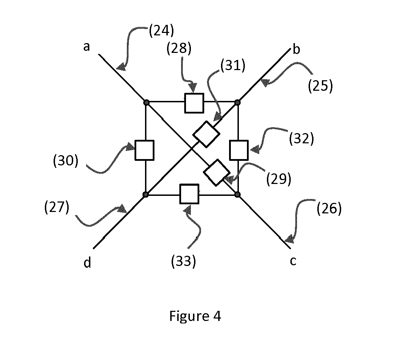

Figure 4 illustrates an embodiment of the invention where the connection has four terminals interconnecting. In this case there are four terminals (24-27) one for each DC feed. Each terminal is interconnected with each other terminal through one of the six breaker circuits (28-33). For example, terminal 'a' (24) connects to terminal 'b' (25) through breaker circuit (28). Terminal 'a' connects to terminal 'c' (26) through breaker circuit (29) and terminal 'a' connects to terminal 'd' (27) through breaker circuit (30). Calculation of the loss reductions can be made for the 4 terminal system and these show that the reduction in losses between pairs of paths is a factor of four better than the prior art if the breaker circuit has a resistive characteristic like MOSFET technology. In addition, two breaker circuits can be taken out of service and the system will still provide power flow between any pair of terminals (at reduced system level power). A further breaker circuit can also be taken out of service and the system will still provide power flow between any pair of terminals but with conditions.

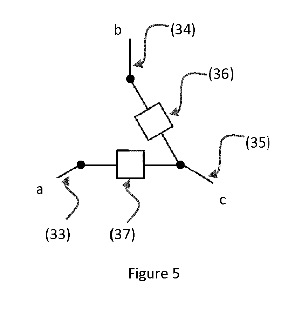

In some circumstances, a particular interconnection between pairs of terminals may not be required. For example, if the pair terminals are connected to sources of energy generation and it is not envisaged that power flow between these sources will be a primary mode of operation. In such instances, it may be economically prudent to not include a breaker circuit between these two terminals. Figure 5 shows an example of such a situation where three terminals (33-35) meet at a connection. In this case there is no single breaker circuit path between terminals 'a' (33) and 'b' (34).

### Breaker circuit ratings

The ratings of the individual breaker circuits are specified during system design. The ratings of the breakers are determined by a number of factors including proposed power flows, direction of power flow, generation types, converter technologies and fault analysis. Therefore, in the proposed embodiment of the invention, the ratings of each breaker circuit may be identical or may be non-identical.

### Breaker circuit technologies

There are a wide variety of potential breaker circuit technologies for multi-terminal DC systems. This includes breaker circuits based solely on power semiconductors to perform breaking operation, hybrid breakers that use a combination of power semiconductors and mechanically-based breakers to perform breaking operation, and 'unified' converters where the breaker circuit is an integral function provided by the converter. In a 'unified' converter, the converter is a multi-functional circuit which has breaker circuit properties hence is capable of breaking DC currents. In our invention the configuration of breaker circuits between DC terminals is independent of the technology used to provide the breaker circuit function whether the function is provided directly or indirectly.

In addition to the basic technology involved in providing the breaker operation, there are breaker circuits which are uni-directional and bi-directional. A uni-directional breaker circuit is capable of breaking the DC current in one direction only. A bi-directional breaker circuit can break DC current of both polarities. In our invention the configuration of breaker circuits between DC terminals can be implemented with combinations breaker circuits that are capable of blocking uni- and bi-directional currents and voltages.

### Monopole and Bipole Systems

The invention can be applied to both monopole and bipole DC systems. The invention configures the breaker circuits at nodes in the circuit and the arrangement is independent of whether the node is at a positive potential with respect to ground, a negative potential with respect to ground, at ground potential or at a floating potential with respect to ground potential. Therefore the invention can be used at any node of a DC system. In a bipole system with an earth return cable, at a system interconnection point there may be, for example, three nodes: one node usually at a positive potential, one node usually at a negative potential, and one node usually at the ground potential. At each of these three nodes there is an interconnection of three, or more, DC electric feeds according to, for example, Figure 3 and 4.

### Interconnecting Systems with Different Voltage Levels

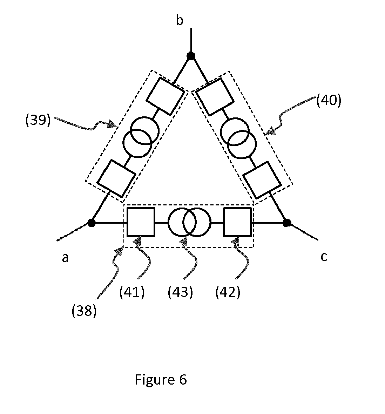

DC systems with different voltage levels may need to be interconnected with appropriate levels of protection including breaker circuits. The interconnection potentially requires the use of DC voltage transformation elements which are capable of step-up or step-down voltage conversion. Possible technical solutions exist for DC voltage transformation elements, for example, which include the use of two converter circuits, each capable of acting as a breaker circuit, connected together through an AC transformer which provides voltage transformation. Figure 6 shows an example of the invention used with three such DC voltage transformation elements (38-40) where each transformation element includes two converter circuits (41-42) and an AC transformer (43). Such a system offers additional redundancy as each converter circuit, (41) and (42), can independently provide the breaker circuit function between terminals 'a' and 'c'. The voltages of the interconnected systems can be the same or different if isolation is a requirement.

In Figure 6, the three DC electrical feeds can each be at a different voltage levels. There are other configurations, for example, terminals 'a' and 'b' might utilise the same voltage, in which case the DC voltage transformation element (39) could be replaced by a breaker circuit (21).

## Claims

1. A configuration of breaker circuits for interconnection of multi-terminal connections in multi-terminal DC electrical power systems where each individual terminal is interconnected to each of the other individual terminals through a breaker circuit.

2. A configuration according to claim 1 where the breaker circuits interconnecting pairs of terminals at the multi-terminal connection are of identical ratings.

3. A configuration according to claim 1 where the breaker circuits interconnecting pairs of terminals at the multi-terminal connection are of non-identical ratings.

4. A configuration according to claim 1 where one or more of the breaker circuits interconnecting pairs of terminals at the multi-terminal connection are not present, with the pair of terminals no longer interconnected.

5. A configuration according to claims 1-4 where one or more of the breaker circuits are bi-directional DC circuit breakers.

6. A configuration according to claims 1-4 where one or more of the breaker circuits are uni-directional DC circuit breakers.

7. A configuration according to claims 1-4, where one or more of the breaker circuits are dedicated circuit breakers with the primary function of breaking normal or fault currents when activated.

8. A configuration according to claims 1-4, where one or more of the breaker circuits are multi-functional circuits which have breaker circuit properties hence are capable of breaking normal or fault currents when activated appropriately.

9. A configuration according to claim 1, where one or more of the breaker circuits are dc voltage transformation elements.

10. A configuration as described herein with reference to figures 3-6 of the accompanying drawings.
